# EUROPEAN PATENT SPECIFICATION

(11) **EP 1 397 880 B1**
(45) Date of publication and mention of the grant of the patent: **11.10.2006**
(21) Application number: 02733106.5
(22) Date of filing: 04.06.2002
(51) Int. Cl.: H04L 1/06, H04L 25/03, H04B 7/08, H04N 5/00

(54) **JOINT TIMING RECOVERY AND EQUALIZATION FOR AN N-ANTENNAE SYSTEM**
GEMEINSAME TAKTRÜCKGEWINNUNG UND ENTZERRUNG FÜR EIN SYSTEM VON N ANTENNEN
SYSTEME COMMUN POUR L'EXTRACTION DE LA SYNCHRONISATION ET L'EGALISATION DANS UN SYSTEME A N ANTENNES

(30) Priority: 04.06.2001 US 873567
(43) Date of publication of application: 17.03.2004
(73) Proprietor: Koninklijke Philips Electronics N.V., 5621 BA Eindhoven (NL)
(72) Inventor: MEEHAN, Joseph, Internationaal Octrooibureau B.V., NL-5656 AA Eindhoven (NL); OUYANG, Xuemei, Internationaal Octrooibureau B.V., NL-5656 AA Eindhoven (NL)
(74) Representative: Groenendaal, Antonius W. M.
(86) International application number: PCT/IB2002/001976
(87) International publication number: WO 2002/100028

(56) References cited:
- EP-A- 0 696 856
- US-A- 5 907 303
- IEEE TRANSACTIONS OF COMMUNICATIONS, vol. 45, no. 8, August 1997 (1997-08), pages 925-936, XP000702910 NEW YORK, USA

## Description

The present invention relates to a timing recovery loop for a digital receiver comprising an antenna and a further antenna, and also relates to a digital receiver comprising an antenna and a further antenna and a timing recovery loop, and also relates to a timing recovery method for use in a digital receiver.

A digital transmission is susceptible to multipath fading or the like and invites waveform distortion of the transmitted signal resulting in degradation of signal quality. In order to minimize this problem, it is the current practice to employ an automatic adaptive equalizer using a transversal filter. An adaptive equalizer may be classified into linear and non-linear types. Linear equalization has found extensive use in terrestrial digital communications systems. However, it is unable to effectively minimize deep or severe multipath distortion. Therefore, residual intersymbol interference undesirably increases. In particular, as a signal transmission rate becomes higher and signal propagation distance increases, the linear equalization is no longer sufficient to handle severe frequency selective fading wherein multipath delay spreads over a transmission symbol period. To overcome this problem, a non-linear type equalizer, which takes the form of a decision feedback equalizer (DFE), is often employed.

It will be appreciated that the DFE includes both a forward equalizer (FE) and a feedback equalizer (FBE). Furthermore, the DFE includes a decision circuit or decision device DD and a subtractor. In operation, the DFE is supplied with, for example, an incoming QAM signal and operates to minimize intersymbol interference (ISI) due to a precursor of an impulse response at the forward equalizer FE, while minimizing ISI caused by a postcursor at the feedback equalizer FBE. The output of the forward equalizer FE is subtracted from the output of the feedback equalizer at the subtractor. The decision signal output from the decision device DD and then fed back to the feedback equalizer FBE, is free of intersymbol interference and noises. Therefore, the equalization capability of the feedback equalizer FBE using the decision feedback technique, is higher than that of the forward equalizer FE. This means that the backward equalizer is capable of completely removing ISI caused by a postcursor of impulse response (viz., minimum phase shift fading). It goes without saying that the DFE is superior to the case where only the forward equalizer FE is provided, which has the same function as the linear equalizer mentioned above.

On the other hand, intersymbol interference due to a precursor (non-minimum phase shift fading) is equalized at the forward equalizer FE whose function equals that of the linear equalizer. Consequently, in connection with the ISI due to non-minimum phase shift fading, the DFE merely implements equalization which is identical to that of the forward equalizer FE. This is the reason why an easily installed linear equalizer FE is chiefly employed, rather than a complex DFE, in terrestrial digital microwave communications systems even though severe distortions due to non-minimum phase fading occurs frequently.

The ATSC standard set forth by the Advanced Television Systems Committee in the document entitled "ATSC Digital Television Standard" (Document A53, September 16, 1995), for terrestrial Digital TV in the United States requires transmission of an MPEG bit stream of 19.28 Mbps over a bandwidth of 6 MHz at a symbol rate of 10.76 MHz in the VHF and UHF carrier frequency range. The modulation scheme used is a single carrier 8 level Vestigial Sideband (VSB) modulation scheme.

Many digital television receivers have internal antennas or are connected to indoor antennas. In such digital television receivers, there can be problems in receiving a good quality signal due to the presence of multiple signal echoes created by obstacles in the room. The multiple signal echoes are inteferer signals that arrive late or early at the antenna (i.e., multipath delay). In cases where the television receiver is connected to a readily accessible indoor antenna, the indoor antenna may be manually rotated or adjusted to maximize the main signal and minimize the unwanted signals created by the multiple signal echoes of the main signal. In cases where the television receiver has an internal antenna that is not readily accessible, one must manually rotate or adjust the entire television receiver in order to make the desired adjustment.

The analysis of current synchronization algorithms for reception of ATSC Terrestrial DTV signals indicates that they are liable to fail in situations where there is significant Intersymbol Interference (ISI). Since the next generation in US Terrestrial DTV receivers will incorporate multiple antennae, and since current synchronization algorithms will not work for multiple antenna inputs, this problem will only get worse. In other words, new synchronization algorithms are and will be required.

As discussed above, in order to compensate for ISI and other sources of signal degradation and distortion, an equalizer, e.g., a fractionally spaced adaptive filter, is included in the receiver. It will be appreciated that an adaptive filter can modify, from time instant to time instant, the coefficients, also referred to as tap weights, used in the filter to remove ISI and to compensate for amplitude and group delay distortions. The update of the tap weights is done to minimize the error between the output of the filter and its expected or sliced value, i.e. the nearest constellation point. This error is effectively a measure of the difference between the actual output of the filter and the expected output. The adaptive process continues until the error is at a minimum, i.e., the filter converges.

The quality of convergence of an equalizer depends on many factors including the number of taps, initial tap weights, desired convergence rate, signal to noise ratio (SNR) at the input and phase changes caused by a timing recovery circuit at the receiver, and can be accomplished with various adaptive algorithms.

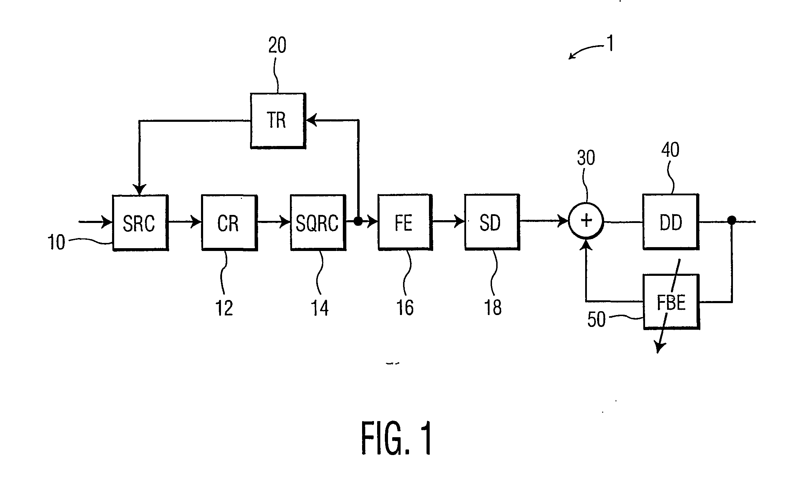

One point of failure in the receiver is illustrated in Fig. 1, which depicts Timing Recovery (TR) circuitry employed in conventional chipsets. In Fig. 1, a digital television (DTV) receiver 1 includes a sample rate converter (SRC) 10, a carrier recovery (CR) circuit 12, a square-root raised cosine (SQRC) filter 14 (e.g., a finite impulse response (FIR) filters with a square root of a raised cosine characteristic such as described in U.S. Patent No. 6,216,250 to Williams), a forward equalizer (FE) 16, a sync detector (SD) 18, an arithmetic device 30, and a decision device (DD) 40 arranged in that order. Timing recovery (TR) circuitry 20 receives the output of the SQRC filter 14 and generates a TR control signal which is applied to a control input terminal of SRC 10. It will also be noted that the output of DD 40 is applied to a Feedback Equalizer 50, the output of which is applied to a second input port of the arithmetic device 30.

Preferably, the sample rate converter can be similar to that disclosed in U.S. Patent No. 6,141,671 to Adams, et al, which discloses circuitry for converting a sequence of input samples at a first sampling rate defining an input period to a sequence of output samples at a second sampling rate. Moreover, the carrier recovery circuit can take numerous forms, such as that disclosed in U.S. Patent No. 6,192,088 Aman et al., which describes a digital carrier recovery system that includes acquisition and tracking modes of operation. It will be appreciated that this carrier recovery circuit seeks and locks to the long term frequency offset of the received carrier signal circuit in the acquisition mode while tracking the instantaneous variations in the carrier phase in the tracking mode. Furthermore, it will be appreciated that decision-directed timing recovery circuitry for a VSB signal receiver adjusts the frequency and phase of the sampling clock to optimize the timing of samples, i.e., to insure that the sampling is in temporal alignment with the transmission of symbols on the VSB carrier. The timing recovery circuitry advantageously can be of the same general type as S. U. H. Qureshi described for use with pulse amplitude modulation (PAM) signals in his paper "Timing Recovery for Equalized Partial-Response Systems", IEEE Transactions on Communications, Dec. 1976, pp. 1326-1333.

It will be understood from Fig. 1 that the TR circuitry and corresponding algorithm (software) is in the front end of the DTV receiver 1 and, hence, always sees the complete distorted channel. In some cases, a heavily distorted channel can mean that the TR algorithm cannot achieve a synchronization lock and, thus, the performance of the complete receiver system is markedly reduced.

US 5,907,303 discloses a constant modulus algorithm based antenna system. This system is relatively old-fashioned.

It is an object of the invention, inter alia, to provide a timing recovery loop, which is relatively up-to-date.

Further objects of the invention are, inter alia, to provide a digital receiver comprising an antenna and a further antenna and a timing recovery loop and to provide a timing recovery method, which are relatively up-to-date.

The invention relates to a timing recovery loop for a digital receiver according to claim 1, and a timing recovery method according to claim 12.

The article "Symbol-Rate Timing Recovery Comprising the Optimum Signal-to-Noise Ratio in a Digital Subscriber Loop" IEEE TRANSACTIONS OF COMMUNICATIONS, vol. 45, no. 8, August 1997 (1997-08), pages 925-936, NEW YORK, USA disloses a receiver for receiving signals via a digital subscriber line or other communication channel. This receiver is not designed to handle signal interference resulting from a wireless multi path environment.

These and various other features and aspects of the present invention will be readily understood with reference to the following detailed description taken in conjunction with the accompanying drawings, in which like or similar numbers are used throughout, and in which:
Fig. 1 is a high-level block diagram of a conventional timing recovery loop implemented in a DTV receiver;
Fig. 2 is a high-level block diagram of one example of a timing recovery loop implemented in a DTV receiver;
Fig. 3 is a high-level block diagram of a preferred embodiment of a timing recovery loop implemented in a DTV receiver according to the present invention, which receiver is connected to an antenna array; and
Fig. 4 is a high-level block diagram of another preferred embodiment of an adaptive timing recovery loop implemented in a DTV receiver according to the present invention.

The present invention provides a digital television receiver, which combines equalization and the Timing Recovery functions. More specifically, the DTV receiver according to the present invention utilizes an equalized signal as the input to the Timing Recovery loop.

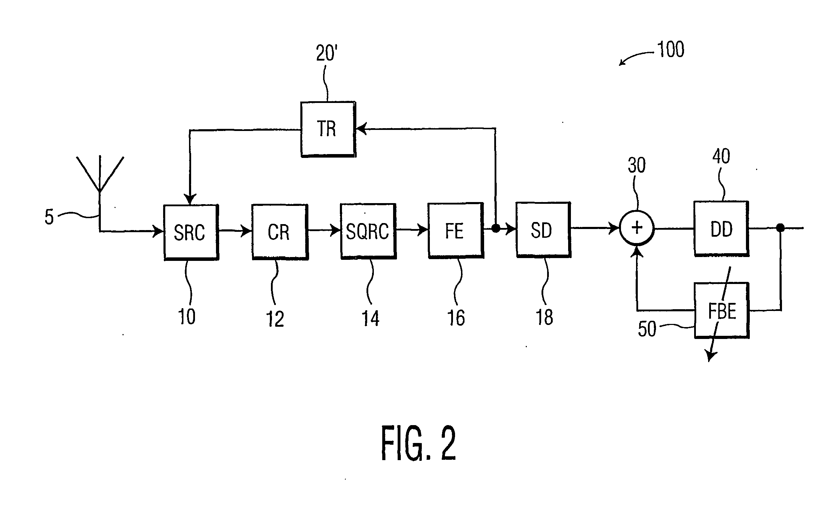

An example of a DTV receiver 100 is illustrated as being connected to an antenna 5 in Fig. 2. The DTV receiver includes a sample rate converter (SRC) 10, a carrier recovery (CR) circuit 12, a square-root raised cosine (SQRC) filter 14, a forward equalizer (FE) 16, a sync detector (SD) 18, an arithmetic device 30, and a decision device (DD) 40 arranged similar to the arrangement illustrated in Fig. 1. However, in Fig. 2, the timing recovery (TR) circuitry 20' receives the output of the FE 16 and generates a TR control signal, which is applied to a control input terminal of SRC 10. It will also be noted that the output of DD 40 is applied to a Feedback Equalizer 50, the output of which is applied to a second input port of the arithmetic device 30, as previously discussed.

In other words, in the DTV receiver implementation illustrated in Fig. 1, the feedback signal applied to the timing recovery (TR) loop is at the output of the SQRC filter 14. In contrast, in the example depicted in Fig. 2, the feedback signal applied to the TR loop is generated downstream of the SQRC filter and constitutes an equalized feedback signal. It will be appreciated that the equalized feedback signal advantageously can be the output of the forward equalizer (FE) or the output of the complete Decision Feedback Equalizer (DFE). It will also be appreciated that utilization of the equalized feedback signal as the input into the TR loop will necessarily be a cleaner signal and, hence, maximize the possibility of achieving a synchronization lock under degraded channel conditions.

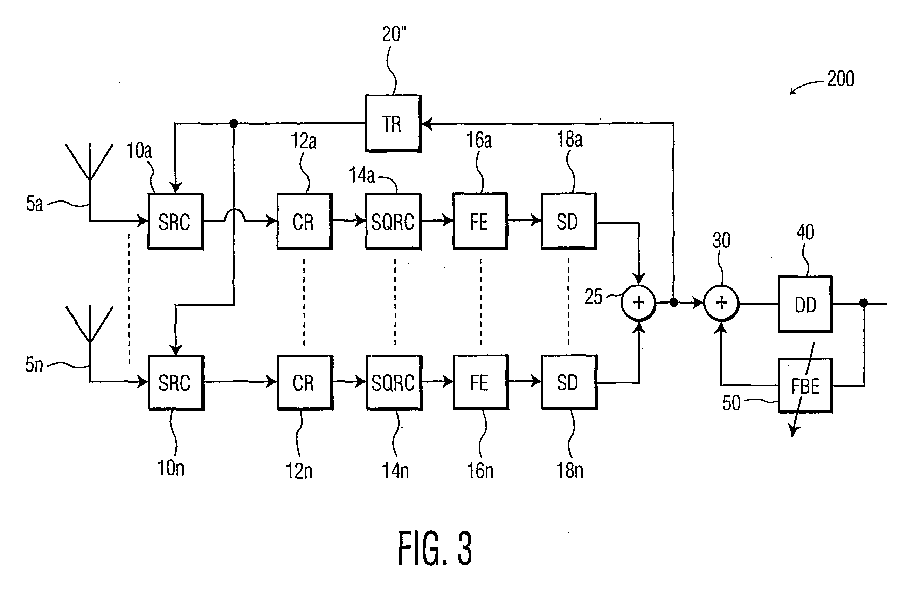

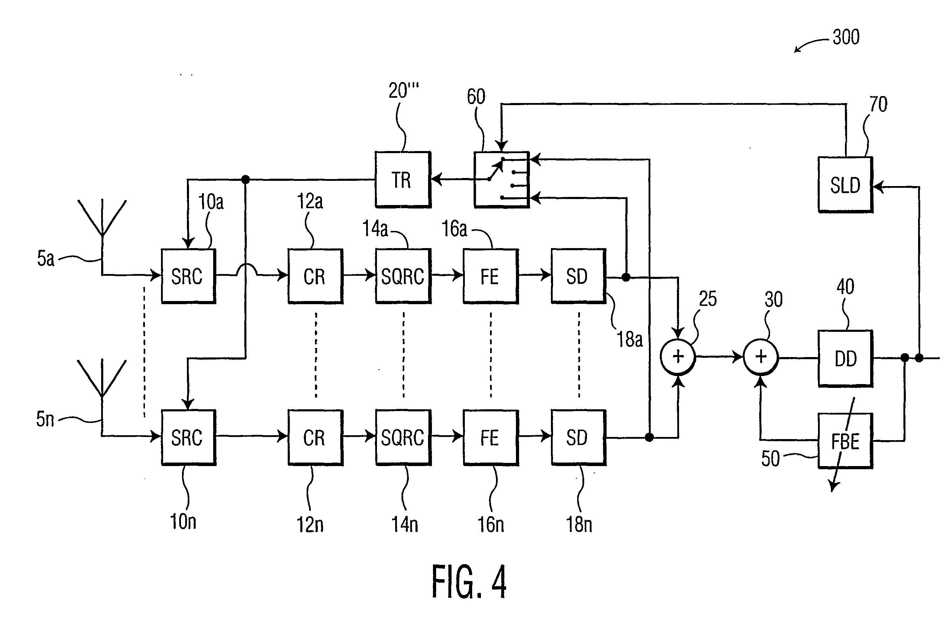

The proposed next generation of US Terrestrial DTV receivers will incorporate multiple antenna inputs. It will be appreciated that the example illustrated in Fig. 2 would not provide an optimal solution to the timing recovery problem since there would now be multiple inputs in need of synchronization. There are several ways to adapt the technique to a multiple antenna environment is a skilled manner. First, the DTV receiver could advantageously include only one TR loop; the input to the TR loop would be the equalized feedback signal derived from combined output of all the antennae. This is shown in Fig. 3. Alternatively, the TR algorithm could be implemented with an independent TR loops for each antenna. It could also be implemented by a single TR circuit generating a common TR control signal applied to all of the SCR circuits in the DTV receiver; in that case, the DTV receiver would require a switch permitting the equalized feedback signal providing the optimal synchronization lock to be applied to the TR circuit. This arrangement, which represents yet another preferred embodiment of the present invention, is depicted in Fig. 4 and will be discussed below.

As mentioned above, another preferred embodiment of the DTV receiver according to the present invention, which permits the adaptation of an equalization structure to a beamforming antenna system to thereby produce an adaptive Digital Broadband Beamforming (DBBF) receiver system for receiving an ATSC 8-VSB signal, is illustrated in Fig. 3. More specifically, Fig. 3 illustrates a high-level block diagram of an adaptive DBBF receiver system 200 connected to antennae 5a,..., 5n, which includes a sample rate converter (SRC) 10a, a carrier recovery (CR) circuit 12a, a square-root raised cosine (SQRC) filter 14a, a forward equalizer (FE) 16a, a sync detector (SD) 18a, and an arithmetic device 25. Moreover, the receiver system 200 includes a sample rate converter (SRC) 10n, a carrier recovery (CR) circuit 12n, a square-root raised cosine (SQRC) filter 14n, a forward equalizer (FE) 16n, a sync detector (SD) 18n. The output of SD 18n is applied to another input port of the arithmetic device 25. It will be appreciated that any number N of antennas can be accommodated using the front-end arrangement illustrated in Fig. 3. The output of arithmetic device 25 is applied to a decision device (DD) 40 via a second arithmetic device 30. It will also be noted that the output of DD 40 is applied to a Feedback Equalizer 50, the output of which is applied to a second input port of the arithmetic device 30.

In the DTV receiver 200 illustrated in Fig. 3, the timing recovery (TR) circuitry 20" receives the output of the arithmetic device 25 and generates a TR control signal, which is applied to a control input terminal of SRC 10. It will be appreciated that the output of arithmetic device 25, while being an equalized feedback signal, represent the combination of all of the signals from the various antennas 5a,..., 5n received by the DTV receiver 200. It will be appreciated that this may not be the optimum technique for generating and/or selecting the equalized feedback signal needed by the TR loop.

Fig. 4 illustrates a high-level block diagram of an adaptive DBBF receiver system 300 connected to antennae 5a,...,5n, which includes a sample rate converter (SRC) 10a, a carrier recovery (CR) circuit 12a, a square-root raised cosine (SQRC) filter 14a, a forward equalizer (FE) 16a, a sync detector (SD) 18a, and an arithmetic device 25. Moreover, the DTV receiver 300 includes a sample rate converter (SRC) 10n, a carrier recovery (CR) circuit 12n, a square-root raised cosine (SQRC) filter 14n, a forward equalizer (FE) 16n, a sync detector (SD) 18n. The output of SD 18n is applied to another input port of the arithmetic device 25. It will be appreciated that any number N of antennas can be accommodated using the front-end arrangement illustrated in Fig. 3. The output of arithmetic device 25 is applied to a decision device (DD) 40 via a second arithmetic device 30. It will also be noted that the output of DD 40 is applied to a Feedback Equalizer 50, the output of which is applied to a second input port of the arithmetic device 30.

As with the receiver system 200 illustrated in Fig. 3, the receiver system 300 include TR circuitry 20"' generating a TR control signal which can be applied to all of the SRC circuits 10a, ..., 10n. Preferably, the input of the TR circuit is provided by a selector switch 60, e.g., a multiplexer, which advantageously can connect one of the several equalized feedback signals generated by the receiver system 300 to the TR circuitry. In an exemplary case, the selector switch 60 receives equalized feedback signals EFSa, ..., EFSn output by sync detectors 18a, ..., 18n, respectively. Advantageously, selector switch 60 can be operated by a sync lock detector 70, which can receive an output signal from a convenient downstream component, e.g., the output of decision device 40.

From the discussion above, it will be appreciated that there are two main advantages to this novel method of Timing Recovery. Primarily, the overall performance of the Timing Recovery loop will be noticeably improved due primarily to the fact that the equalized feedback signal going into the TR loop is relatively clean (in contrast to the output of the SQRC filter. Thus, the DTV receiver according to the present invention will achieve synchronization lock even in severely degraded channel conditions. Secondly, the Timing Recovery system and corresponding method advantageously is more amenable to increasing the number of antenna inputs, since the DTV receiver can be implemented with only one Timing Recovery loop. It will also be appreciated that the advantages, and others that are readily apparent to one of ordinary skill in the art, can be implemented while incurring little or no additional costs.

It should be mentioned that while the discussion of the preferred embodiments addressed applications involving DTV receivers, the invention is not limited to such applications. Thus, although presently preferred embodiments of the present invention have been described in detail herein, it should be clearly understood that many variations and/or modifications of the basic inventive concepts herein taught, which may appear to those skilled in the pertinent art, will still fall within the scope of the present invention, as defined in the appended claims.

## Claims

1. A timing recovery loop for a digital receiver (200, 300) comprising an antenna (5a) and a further antenna (5n), the timing recovery loop comprising:
- a sample rate converter (10a) which receives a symbol stream at a first sampling rate from the antenna (5a) and outputs the symbol stream at a second sampling rate responsive to a timing recovery control signal;
- a forward equalizer (16a) generating an equalized feedback signal based on the symbol stream at the second sampling rate;
- at least one further sample rate converter (10n) which receives a further symbol stream at said first sampling rate from the further antenna (5n) and outputs the further symbol stream at said second sampling rate responsive to the timing recovery control signal;
- at least one further forward equalizer (16n) generating a further equalized feedback signal based on the further symbol stream at the second sampling rate; a timing receiving circuit (20", 20''') generating the timing recovery control signal based on the equalized feedback and/or said at least further equalized feedback signal; and
- an arithmetic device (25) comprising an input coupled to an output of the forward equalizer (16a) and comprising a further input coupled to an output of the further forward equalizer (16n).

2. The timing recovery loop as claimed in claim 1, **characterized in that** the arithmetic device (25) comprises an output coupled to an input of the timing recovery circuit (20").

3. The timing recovery loop as claimed in claim 1 or 2, **characterized in that** the input of the arithmetic device (25) is coupled to the output of the forward equalizer (16a) via a sync detector (18a) and the further input of the arithmetic device (25) is coupled to the output of the further forward equalizer (16n) via a further sync detector (18n).

4. The timing recovery loop as claimed in claim 1, **characterized in that** the timing recovery loop further comprises
- a selector (60) operated by a sync lock detector (70) and comprising an input coupled to an output of the forward equalizer (16a) and comprising a further input coupled to an output of the further forward equalizer (16n) and comprising an output coupled to an input of the timing recovery circuit (20"').

5. The timing recovery loop as claimed in claim 4, **characterized in that** the input of the selector (60) is coupled to the output of the forward equalizer (16a) via a sync detector (18a) and the further input of the selector (60) is coupled to the output of the further forward equalizer (16n) via a further sync detector (18n).

6. The timing recovery loop as claimed in claim 4 or 5, **characterized in that** the timing recovery loop further comprises
- a further arithmetic device (30) comprising an input coupled to an output of the arithmetic device (25);
- a decision device (40) comprising an input coupled to an output of the further arithmetic device (30) and comprising an output coupled to an input of the sync lock detector (70); and
- a feedback equalizer (50) comprising an input coupled to the output of the decision device (40) and comprising an output coupled to a further input of the further arithmetic device (30).

7. The timing recovery loop as claimed in claim 1, **characterized in that** the timing recovery loop further comprises
- a carrier recovery circuit (12a) electrically coupling the sample rate converter (10a) to the forward equalizer (16a).

8. The timing recovery loop as claimed in claim 7, **characterized in that** the timing recovery loop further comprises
- a finite impulse response filter (14a) electrically coupling the carrier recovery circuit (12a) to the forward equalizer (16a).

9. The timing recovery loop as claimed in claim 8, **characterized in that** the timing recovery loop further comprises
- a further carrier recovery circuit (12n) electrically coupling the further sample rate converter (10n) to the further forward equalizer (16n).

10. The timing recovery loop as claimed in claim 9, **characterized in that** the timing recovery loop further comprises
- a further finite impulse response filter (14n) electrically coupling the further carrier recovery circuit (12n) to the further forward equalizer (16n).

11. A digital receiver (200, 300) comprising an antenna (5a) and a further antenna (5n) and the timing recovery loop as defined in any one of the claims 1-10.

12. A timing recovery method for use in a digital receiver (200, 300) comprising an antenna (5a) and a further antenna (5n), the method comprising the steps of
- receiving a symbol stream at a first sampling rate from the antenna (5a) and outputting the symbol stream at a second sampling rate responsive to a timing recovery control signal;
- generating an equalized feedback signal based on the symbol stream at the second sampling rate;
- receiving at least a further symbol stream at said first sampling rate from the further antenna (5n) and outputting the further symbol stream at said second sampling rate responsive to the timing recovery control signal;
- generating at least a further equalized feedback signal based on the further symbol stream at the second sampling rate; generating the timing recovery control signal based on the equalized feedback signal and/or said at least further equalized feedback signal; the steps of generating the equalized feedback signal and the further equalized feedback signal being followed by an arithmetic step.

## Patentansprüche

1. Zeitwiederherstellungsschleife für einen digitalen Empfänger (200, 300) mit einer Antenne (5a) und einer weiteren Antenne (5n) wobei die Zeitwiederherstellungsschleife weiterhin Folgendes umfasst:
- einen Abtastratenwandler (10a), der einen Symbolstrom mit einer ersten Abtastrate von der Antenne (5a) empfängt und den Symbolstrom mit einer zweiten Abtastrate liefert, und zwar in Reaktion auf ein Zeitwiederherstellungssteuersignal;
- einen Vorwärtsentzerrer (16a), der ein entzerrtes Rückkopplungssignal erzeugt, und zwar auf Basis des Symbolstroms mit der zweiten Abtastrate;
- wenigstens einen weiteren Abtastratenwandler (10n), der einen weiteren Symbolstrom mit der genannten ersten Abtastrate von der weiteren Antenne (5n) empfängt und den weiteren Symbolstrom mit der genannten zweiten Abtastrate liefert, und zwar in Reaktion auf das Zeitwiederherstellungssteuersignal;
- wenigstens einen weiteren Vorwärtsentzerrer (16n), der ein weiteres entzerrtes Rückkopplungssignal erzeugt, und zwar auf Basis des weiteren Symbolstroms mit der zweiten Abtastrate;
- eine Zeitwiederherstellungsschaltung (20", 20"'), die das Zeitwiederherstellungssteuersignal erzeugt, und zwar auf Basis des entzerrten und/oder des genannten wenigstens weiteren entzerrten Rückkopplungssignals; und
- eine Rechenanordnung (25) mit einem Eingang, der mit einem Ausgang des Vorwärtsentzerrers (16a) gekoppelt ist und mit einem weiteren Eingang, der mit einem Ausgang des weiteren Vorwärtsentzerrers (16n) gekoppelt ist.

2. Zeitwiederherstellungsschleife nach Anspruch 1, **dadurch gekennzeichnet, dass** die Rechenanordnung (25) einen Ausgang aufweist, der mit einem Eingang der Zeitwiederherstellungsschaltung (20") gekoppelt ist.

3. Zeitwiederherstellungsschleife Mehrkanal-Audiosignal 1 oder 2, **dadurch gekennzeichnet, dass** der Eingang der Rechenanordnung (25) über einen Synchronisationsdetektor (18a) mit dem Ausgang des Vorwärtsentzerrers (16a) gekoppelt ist und der weitere Eingang der Rechenanordnung (25) über einen weiteren Synchronisationsdetektor (18n) mit dem Ausgang des weiteren Vorwärtsentzerrers (16n) gekoppelt ist.

4. Zeitwiederherstellungsschleife nach Anspruch 1, **dadurch gekennzeichnet, dass** diese Schleife weiterhin Folgendes umfasst:
- einen Selektor (60), betrieben von einem Synchronisationsdetektor (70) und mit einem Eingang, der mit einem Ausgang der Vorwärtsentzerrers (16a) gekoppelt ist, und mit einem weiteren Eingang, der mit einem Ausgang eines weiteren Vorwärtsentzerrers (16n) gekoppelt ist, und mit einem Ausgang, der mit einem Eingang der Zeitwiederherstellungsschaltung (20") gekoppelt ist.

5. Zeitwiederherstellungsschleife nach Anspruch 4, **dadurch gekennzeichnet, dass** der Eingang des Selektors (60) über einen Synchronisationsdetektor (18a) mit dem Ausgang des Vorwärtsentzerrers (16a) gekoppelt ist, und der Eingang des Selektors (60) über einen weiteren Synchronisationsdetektor (18n) mit dem Ausgang des weiteren Vorwärtsentzerrers (16n) gekoppelt ist.

6. Zeitwiederherstellungsschleife nach Anspruch 4 oder 5, **dadurch gekennzeichnet, dass** diese Schleife weiterhin Folgendes umfasst:
- eine weitere Rechenanordnung (30), die einen Eingang aufweist, der mit einem Ausgang der Rechenanordnung (25) gekoppelt ist;
- eine Entscheidungsanordnung (40) mit einem Eingang, der mit einem Ausgang der weiteren Rechenanordnung (30) gekoppelt ist, und mit einem Ausgang, der mit einem Eingang des Synchronisationsverriegelungsdetektors (70) gekoppelt ist; und
- einen Rückkopplungsentzerrer (50), der einen Eingang aufweist, der mit dem Ausgang der Entscheidungsanordnung (40) gekoppelt ist, und mit einem Ausgang, der mit einem weiteren Eingang der weiteren Rechenanordnung (30) gekoppelt ist.

7. Zeitwiederherstellungsschleife nach Anspruch 1, **dadurch gekennzeichnet, dass** diese Schleife weiterhin Folgendes umfasst:
- eine Trägerwiederherstellungsschaltung (12a), die den Abtastratenwandler (10a) mit dem Vorwärtsentzerrer (16a) elektrisch koppelt.

8. Zeitwiederherstellungsschleife nach Anspruch 7, **dadurch gekennzeichnet, dass** diese Schleife weiterhin Folgendes umfasst:
- ein endliches Stoßantwortfilter (14a), das die Trägerwiederherstellungsschaltung (12a) mit dem Vorwärtsentzerrer (16a) elektrisch koppelt.

9. Zeitwiederherstellungsschleife nach Anspruch 8, **dadurch gekennzeichnet, dass** diese Schleife weiterhin Folgendes umfasst:
- eine weitere Trägerwiederherstellungsschaltung (12n), die den weiteren Abtastratenwandler (10n) mit dem weiteren Vorwärtsentzerrer (16n) elektrisch koppelt.

10. Zeitwiederherstellungsschleife nach Anspruch 9, **dadurch gekennzeichnet, dass** diese Schleife weiterhin Folgendes umfasst:
- ein weiteres endliches Stoßantwortfilter (14n), das die weitere Trägerwiederherstellungsschaltung (12n) mit dem weiteren Vorwärtsentzerrer (16n) elektrisch koppelt.

11. Digitaler Empfänger (200, 300) mit einer Antenne (5a) und einer weiteren Antenne (5n) und mit der Zeitwiederherstellungsschleife nach einem der Ansprüche 1 - 10.

12. Zeitwiederherstellungsverfahren zur Anwendung in einem digitalen Empfänger (200, 300) mit einer Antenne (5a) und einer weiteren Antenne (5n), wobei das Verfahren die nachfolgenden Verfahrensschritte umfasst:
- das Empfangen eines Symbolstroms mit einer ersten Abtastrate von der Antenne (5a) und das Liefern des Symbolstroms mit einer zweiten Abtastrate, und zwar in Reaktion auf ein Zeitwiederherstellungssteuersignal;
- das Erzeugen eines entzerrten Rückkopplungssignals, und zwar auf Basis des Symbolstroms mit der zweiten Abtastrate;
- das Empfangen wenigstens eines weiteren Symbolstroms mit der genannten ersten Abtastrate von der weiteren Antenne (5n) und das Liefern des weiteren Symbolstroms mit der genannten zweiten Abtastrate, und zwar in Reaktion auf das Zeitwiederherstellungssteuersignal;
- das Erzeugen wenigstens eines weiteren entzerrten Rückkopplungssignals, und zwar auf Basis des weiteren Symbolstroms mit der zweiten Abtastrate;
- das Erzeugen des Zeitwiederherstellungssteuersignals, und zwar auf Basis des entzerrten und/oder des genannten wenigstens weiteren entzerrten Rückkopplungssignals;
wobei den Verfahrensschritten zum Erzeugen des entzerrten Rückkopplungssignals und des weiteren Rückkopplungssignals ein Rechenschritt folgt.

## Revendications

1. Boucle d'extraction de la synchronisation pour un récepteur numérique (200,300) comprenant une antenne (5a) et une antenne supplémentaire (5n), la boucle d'extraction de la synchronisation comprenant :
- un convertisseur de fréquence d'échantillonnage (10a) qui reçoit un flux de symboles à une première fréquence d'échantillonnage en provenance de l'antenne (5a) et fournit le flux de symboles à une seconde fréquence d'échantillonnage réagissant à un signal de commande d'extraction de la synchronisation;
- un égaliseur direct (16a) générant un signal de retour égalisé basé sur le flux de symboles à la seconde fréquence d'échantillonnage;
- au moins un convertisseur de fréquence d'échantillonnage supplémentaire (10n) qui reçoit un flux de symboles supplémentaire à ladite première fréquence d'échantillonnage en provenance de l'antenne supplémentaire (5n) et fournit le flux de symboles supplémentaire à ladite seconde fréquence d'échantillonnage réagissant au signal de commande d'extraction de la synchronisation;
- au moins un égaliseur direct supplémentaire (16n) générant un signal de retour égalisé supplémentaire basé sur le flux de symboles supplémentaire à la seconde fréquence d'échantillonnage;
- un circuit d'extraction de la synchronisation (20",20"') générant le signal de commande d'extraction de la synchronisation basé sur le signal de retour égalisé et/ou sur au moins un signal de retour égalisé supplémentaire; et
- un dispositif arithmétique (25) comprenant une entrée couplée à une sortie de l'égaliseur direct (16a) et comprenant une entrée supplémentaire couplée à une sortie de l'égaliseur direct supplémentaire (16n).

2. Boucle d'extraction de la synchronisation selon la revendication 1, **caractérisée en ce que** le dispositif arithmétique (25) comprend une sortie couplée à une entrée du circuit d'extraction de la synchronisation (20").

3. Boucle d'extraction de la synchronisation selon la revendication 1 ou 2, **caractérisée en ce que** l'entrée du dispositif arithmétique (25) est couplée à la sortie de l'égaliseur direct (16a) via un détecteur de synchronisation (18a) et **en ce que** l'entrée supplémentaire du dispositif arithmétique (25) est couplée à la sortie de l'égaliseur direct supplémentaire (16n) via un détecteur de synchronisation supplémentaire (18n).

4. Boucle d'extraction de la synchronisation selon la revendication 1, **caractérisée en ce que** la boucle d'extraction de la synchronisation comprend en outre
un sélecteur (60) actionné par un détecteur de verrouillage de synchronisation (70) et comprenant une entrée couplée à une sortie de l'égaliseur direct (16a) et comprenant une entrée supplémentaire couplée à une sortie de l'égaliseur direct supplémentaire (16n) et comprenant une sortie couplée à une entrée du circuit d'extraction de la synchronisation (20'").

5. Boucle d'extraction de la synchronisation selon la revendication 4, **caractérisée en ce que** l'entrée du sélecteur (60) est couplée à la sortie de l'égaliseur direct (16a) via un détecteur de synchronisation (18a) et **en ce que** l'entrée supplémentaire du sélecteur (60) est couplée à la sortie de l'égaliseur direct supplémentaire (16n) via un détecteur de synchronisation supplémentaire (18n).

6. Boucle d'extraction de la synchronisation selon la revendication 4 ou 5, **caractérisée en ce que** la boucle d'extraction de la synchronisation comprend en outre
- un dispositif arithmétique supplémentaire (30) comprenant une entrée couplée à une sortie du dispositif arithmétique (25);
- un dispositif de décision (40) comprenant une entrée couplée à une sortie du dispositif arithmétique supplémentaire (30) et comprenant une sortie couplée à une entrée du détecteur de verrouillage de synchronisation (70); et
- un égaliseur de retour (50) comprenant une entrée couplée à la sortie du dispositif de décision (40) et comprenant une sortie couplée à une entrée supplémentaire du dispositif arithmétique supplémentaire (30).

7. Boucle d'extraction de la synchronisation selon la revendication 1, **caractérisée en ce que** la boucle d'extraction de la synchronisation comprend en outre
- un circuit d'accrochage de la porteuse (12a) couplant électriquement le convertisseur de fréquence d'échantillonnage (10a) à l'égaliseur direct (16a).

8. Boucle d'extraction de la synchronisation selon la revendication 7, **caractérisée en ce que** la boucle d'extraction de la synchronisation comprend en outre
- un filtre à réponse impulsionnelle finie (14a) couplant électriquement le circuit d'accrochage de la porteuse (12a) à l'égaliseur direct (16a).

9. Boucle d'extraction de la synchronisation selon la revendication 8, **caractérisée en ce que** la boucle d'extraction de la synchronisation comprend en outre
- un circuit d'accrochage de la porteuse supplémentaire (12n) couplant électriquement le convertisseur de fréquence d'échantillonnage supplémentaire (10n) à l'égaliseur direct supplémentaire (16n).

10. Boucle d'extraction de la synchronisation selon la revendication 9, **caractérisée en ce que** la boucle d'extraction de la synchronisation comprend en outre
- un filtre à réponse impulsionnelle finie supplémentaire (14n) couplant électriquement le circuit d'extraction de la porteuse supplémentaire (12n) à l'égaliseur direct supplémentaire (16n).

11. Récepteur numérique (200,300) comprenant une antenne (5a) et une antenne supplémentaire (5n) et la boucle d'extraction de la synchronisation comme définie dans l'une quelconque des revendications 1-10.

12. Procédé d'extraction de la synchronisation destiné à être utilisé dans un récepteur numérique (200,300) comprenant une antenne (5a) et une antenne supplémentaire (5n), le procédé comprenant les étapes de
- réception d'un flux de symboles à une première fréquence d'échantillonnage en provenance de l'antenne (5a) et fourniture du flux de symboles à une seconde fréquence d'échantillonnage réagissant à un signal de commande d'extraction de la synchronisation;
- génération d'un signal de retour égalisé basé sur le flux de symboles à la seconde fréquence d'échantillonnage;
- réception d'au moins un flux de symboles supplémentaire à ladite première fréquence d'échantillonnage en provenance de l'antenne supplémentaire (5n) et fourniture du flux de symboles supplémentaire à ladite seconde fréquence d'échantillonnage réagissant au signal de commande d'extraction de la synchronisation;
- génération d'au moins un signal de retour égalisé supplémentaire basé sur le flux de symboles supplémentaire à la seconde fréquence d'échantillonnage;
génération du signal de commande d'extraction de la synchronisation basé sur le signal de retour égalisé et/ou sur au moins un signal de retour égalisé supplémentaire; les étapes de génération du signal de retour égalisé et du signal de retour égalisé supplémentaire étant suivies par une étape arithmétique.
